# EUROPÄISCHE PATENTSCHRIFT

(11) **EP 2 566 015 B1**
(45) Veröffentlichungstag und Bekanntmachung des Hinweises auf die Patenterteilung: **27.11.2019**
(21) Anmeldenummer: 11179208.1
(22) Anmeldetag: 29.08.2011
(51) Int. Cl.: H02K 5/22, H02K 9/08, H02K 9/14, H02K 11/00

(54) **Elektromotor**
Electric motor
Moteur électrique

(43) Veröffentlichungstag der Anmeldung: 06.03.2013
(73) Patentinhaber: Grundfos Management A/S, 8850 Bjerringbro (DK)
(72) Erfinder: Linnemann Nielsen, Niel Erik, 9600 Aars (DK); Jacobsen, John, 8850 Bjerringbro (DK)
(74) Vertreter: Patentanwälte Vollmann Hemmer Lindfeld Partnerschaft mbB

(56) Entgegenhaltungen:
- DE-A1-102004 013 719
- DE-A1-102007 021 917
- DE-A1-102007 034 013
- DE-A1-102010 002 068
- FR-A- 560 950

## Beschreibung

Die Erfindung betrifft einen Elektromotor mit den im Oberbegriff des Anspruchs 1 angegebenen Merkmalen.

Derartige Elektromotoren zählen zum Stand der Technik und dienen zu vielfältigsten Antriebszwecken, beispielsweise von Kreiselpumpen, Kompressoren, Rührwerken und dergleichen. Dabei ist meist unmittelbar am Motorgehäuse oder auch getrennt davon ein Steuergerät oder dergleichen für den Elektromotor angeordnet, welches ein Steuergerätegehäuse oder anderes weiteres Gehäuse aufweist, in dem mindestens ein beim Betrieb des Motors Wärme erzeugendes Bauteil, beispielsweise ein Leistungswiderstand, ein Transistor, Thyristor, Triac oder dergleichen angeordnet ist. Bei modernen Elektromotoren beinhaltet das Steuergerät häufig nicht nur eine Wicklungsumschaltung sondern einen Frequenzumrichter, der es ermöglicht, den Motor mit praktisch beliebigen Frequenzen und damit Drehzahlen anzusteuern. Derartige Frequenzumrichter enthalten Leistungselektronik, die Wärme erzeugt, welche abzuführen ist.

Aus FR 560.950 ist ein gattungsgemäßer Elektromotor bekannt, bei dem an das Motorgehäuse axial ein Steuergerätgehäuse anschließt und bei dem durch Rotation des Motors Gas im Kreislauf durch die Gehäuse hindurch geführt wird, um Bauteile zu kühlen.

Aus DE 36 42 724 C2 zählt es zum Stand der Technik, das weitere Gehäuse, dort insbesondere das Frequenzumrichtergehäuse mittels des Kühlluftstroms zu kühlen, welcher durch ein auf der Motorwelle außen am Motor sitzendes Lüfterrad erzeugt und mittels einer Lüfterhaube längs des Motors geführt wird. Hierzu sind die Wärme erzeugenden Leistungselektronikbauteile im bodennahen Bereich dieses weiteren Gehäuses angeordnet.

Darüber hinaus zählt es zum Stand der Technik, das weitere Gehäuse an seiner Außenseite berippt auszubilden und durch Konvektion zu kühlen.

Wenn das zur Kühlung nicht ausreicht, kann ein gesonderter Lüfter außen am Gehäuse vorgesehen werden, der den Luftstrom gezielt in das Gehäuse leitet und damit kühlt. Auch kann ein Luftstrom durch das Gehäuse geleitet werden. Die Anordnung eines gesonderten, typischerweise elektromotorisch angetriebenen Kühlgebläses hat jedoch den Nachteil, dass es den Wirkungsgrad des Aggregats verschlechtert und darüber hinaus, dass es eine zusätzliche Fehlerquelle darstellt und vorzeitig ausfallen kann.

Darüber hinaus zählt es bei Pumpenaggregaten zum Stand der Technik, die Leistungselektronik des Frequenzumrichters mit Flüssigkeit zu kühlen, dies ist jedoch bei Elektromotoren an sich nicht praktikabel.

Aus DE 10 2004 013 719 A1 zählt es zum Stand der Technik, die Antriebseinheit, also den Motor und die Anschlusseinheit, also den Umrichter über einen gemeinsamen Kühlkreislauf zu kühlen, wobei in dem Kühlkreislauf eine Kreislaufpumpe und ein Kühler angeordnet sind.

Vor diesem Hintergrund liegt der Erfindung die Aufgabe zugrunde, einen gattungsgemäßen Elektromotor so auszubilden, dass mit konstruktiv einfachen Mitteln eine wirksame Kühlung der Wärme erzeugenden Bauteile in dem weiteren Gehäuse erreicht wird, die den Wirkungsgrad des Motors praktisch nicht beeinträchtigt und zuverlässig arbeitet.

Diese Aufgabe wird durch einen Elektromotor mit den in Anspruch 1 angegebenen Merkmalen gelöst. Vorteilhafte Ausgestaltungen ergeben sich aus den Unteransprüchen, der nachfolgenden Beschreibung und der Zeichnung.

Der erfindungsgemäße Elektromotor, der ein Motorgehäuse, ein elektrische und/oder elektronische Bauteile aufweisendes weiteres Gehäuse aufweist, in dem mindestens ein beim Betrieb des Motors Wärme erzeugendes Bauteil angeordnet ist, ist so ausgebildet, dass mindestens ein fluidführender Kanalkreislauf vorgesehen ist, der das Innere des Motorgehäuses mit dem Innenraum des weiteren Gehäuses leitungsverbindet.

Grundgedanke ist es somit, einen fluidführenden Kanalkreislauf zwischen Motorgehäuse und dem weiteren Gehäuse vorzusehen, sodass ein zur Kühlung geeignetes Fluid in einem Kühlkreislauf geführt werden kann, der das Innere des Motorgehäuses und das Innere des weiteren Gehäuses umfasst.

Mit der erfindungsgemäßen Lösung ist es möglich, Wärmespitzen sowohl motorseitig als auch insbesondere gehäuseseitig, nämlich in dem weiteren Gehäuse abzubauen, in dem ein Fluid durch diese Gehäuse im Kreislauf geführt wird. Es kann damit erreicht werden, dass in beiden Gehäusen, das heißt im Motorgehäuse und in dem weiteren Gehäuse ein etwa gleiches Temperaturniveau herrscht. Insbesondere kann bei geeigneter Auslegung und/oder Steuerung des Motors der Motor als Wärmesenke für die typischerweise von einem Frequenzumrichter in einem Frequenzumrichtergehäuse als weiteres Gehäuse erzeugten Wärme dienen.

Das weitere Gehäuse nimmt ein Steuergerät, insbesondere jedoch einen Frequenzumrichter auf. Ein Steuergerät kann beispielsweise zur Wicklungsumschaltung oder zu einer vereinfachten Drehzahlsteuerung dienen. Dort sind regelmäßig wärmeerzeugende Bauteile, wie elektronische Schalter, Leistungswiderstände oder dergleichen verbaut, die durch die erfindungsgemäße Anordnung vorteilhaft gekühlt werden.

Besonders vorteilhaft anwendbar ist die vorliegende Erfindung, wenn als Elektromotor ein Permanentmagnetmotor eingesetzt wird. Durch die Entwicklung der Permanentmagnete in den letzten Jahren konnte der Wirkungsgrad solcher Motoren erheblich gesteigert werden, womit auch die im Motor erzeugte Abwärme erheblich verringert werden konnte. Bei Verwendung dieser Motoren ist die Erfindung somit besonders vorteilhaft anwendbar, da die vom Frequenzumrichter erzeugte Wärme zumindest zusätzlich auch über den Motor selbst bzw. das Motorgehäuse abgeführt werden kann. Der Einsatz eines Permanentmagnetmotors ist gemäß der Erfindung nicht auf die Verwendung mit einem Frequenzumformer oder-umrichter beschränkt.

Konstruktiv besonders einfach ist es, wenn das im Kanalkreislauf zwischen Motorgehäuse und dem weiteren Gehäuse geführte Fluid ein Gas, insbesondere Luft ist, da dann konstruktiv keine besonderen Vorkehrungen zu treffen sind. Insbesondere treten im Falle von Undichtigkeiten im Kühlmittelkreislauf dann keine Probleme auf. Gemäß der Erfindung kann jedoch als Fluid auch eine Flüssigkeit, typischerweise eine isolierende Flüssigkeit eingesetzt werden, wie beispielsweise ein Silikonöl, was den Vorteil einer höheren Wärmeleitfähigkeit und Wärmekapazität hat. Derartige Kühlmittel werden insbesondere bei Elektromotoren Verwendung finden, die Unterwasser eingesetzt werden, zum Beispiel bei Tauchpumpen.

Konstruktiv einfach wird es in der Regel sein, auf der Welle des Motors ein Laufrad zur Erzeugung einer Fluidströmung im Kanalkreislauf vorzusehen. Ein solches Laufrad wird, wenn als Fluid Gas, insbesondere Luft eingesetzt wird, durch ein Lüfterrad gebildet, wohingegen bei Verwendung einer Kühlflüssigkeit ein Pumpenlaufrad eingesetzt wird. Es versteht sich, dass gemäß der Erfindung eine entsprechende Leiteinrichtung vorgesehen ist.

Das Laufrad sitzt dabei innerhalb des Motorgehäuses, um die Fluidströmung im Kanalkreislauf, das heißt in dem durch Motorgehäuse und weiteres Gehäuse gebildeten Kreislauf zu erzeugen.

Vorteilhaft kann zusätzlich zu dem internen Kühlkreislauf, der vorzugsweise mittels eines innerhalb des Motorgehäuse angeordneten Laufrades erzeugt wird, auf der Motorwelle auch eine Laufrad zur Erzeugung einer Luftströmung längs der Außenseite des Motorgehäuses und/oder des weiteren Gehäuses vorgesehen sein, wie dies grundsätzlich aus dem einleitend genannten Stand der Technik nach DE 36 42 724 C2 bekannt ist. Hierdurch kann das Motorgehäuse und gegebenenfalls auch das weitere Gehäuse mit einem Kühlluftstrom beaufschlagt werden.

Typischerweise nicht notwendigerweise sind das Motorgehäuse und das weitere Gehäuse auch mechanisch miteinander verbunden. Eine solche mechanische Verbindung kann gleichzeitig auch als wärmeleitende Verbindung ausgebildet sein, was von Vorteil ist.

Konstruktiv und wärmetechnisch besonders günstig ist es, wenn das Motorgehäuse und das weitere Gehäuse mindestens eine gemeinsame Gehäusewand aufweisen. Hierdurch ergibt sich zum einen eine sehr raumsparende Baugröße, zum anderen insbesondere wenn zumindest die gemeinsame Gehäusewand aus einem gut wärmeleitenden Werkstoff, insbesondere Metall besteht, ein Wärmeaustausch auch im Bereich dieser Gehäusewand.

Um einen intensiven Wärmetausch innerhalb des Motors und eine gute Durchströmbarkeit zu realisieren, ist gemäß einer Weiterbildung der Erfindung vorgesehen, dass im Rotor und/oder Stator des Motors Nuten oder Kanäle zur Fluidförderung vorgesehen sind.

Gemäß der Erfindung ist eine im Wesentlichen radiale/tangentiale Durchströmung des Motorgehäuses vorgesehen. Es ist im Motorgehäuse ein das Laufrad zur Erzeugung einer Fluidströmung im Kanalkreislauf umgebende Leiteinrichtung vorgesehen, die einen im Wesentlichen radial verlaufenden Leitungsausgang in das weitere Gehäuse und einen im Wesentlichen radial angeordneten aus dem weiteren Gehäuse kommenden Leitungseingang aufweist. Eine solche radiale/tangentiale Kanalkreislaufführung hat den Vorteil, dass sie weitgehend unanhängig in der Rotorlänge ist, was insbesondere für Motoren unterschiedlicher Leistungsgrößen von Vorteil ist, die bei gleichen Motorgehäuseabmessungen sich lediglich in der axialen Länge des Rotors unterscheiden. Dann kann die Fluidströmung unabhängig von der Rotorlänge mittels eines Laufrades und einer dieses ebenfalls umgebenden Leiteinrichtung erzeugt werden, ohne dass es auf die Länge das Stators ankommt, da die entsprechenden Leitungsausgänge im Bereich der Leiteinrichtung und nicht im übrigen Bereich des Rotors/Stators liegen. Bei einer solchen Anordnung ist gemäß der Erfindung vorgesehen, dass Leitungseingang und Leitungsausgang in derselben radialen Ebene liegen, da dann die Leiteinrichtung als intakter, das Laufrad umgebender Leitkanal ausgebildet sein kann.

Ein Leitungsanschluss wird vorteilhaft durch eine Ausnehmung in der Gehäusewand gebildet, in die ein entsprechend vom Gegengehäuse eingreifendes Leitungsstück eingreift oder aber die durch eine dazu fluchtende Ausnehmung in der Wand des Gegengehäuses überdeckt wird. Soweit die beiden Gehäuse (Motorgehäuse und weiteres Gehäuse) eine gemeinsame Wand haben, wirkt eine solche Ausnehmung um die Leitungsverbindung zwischen den Gehäusen herzustellen.

Die erfindungsgemäße Ausgestaltung ist vorteilhaft bei Trockenläufern anwendbar, kann jedoch ohne weiteres auch bei Nassläufern, also insbesondere bei Spaltrohrmotoren Anwendung finden, wie sie zum Antrieb von Kreiselpumpen gebräuchlich sind.

Die Erfindung ist nachfolgend anhand von in der Zeichnung dargestellten Ausführungsbeispielen näher erläutert. Es zeigen:
- Fig. 1: in stark vereinfachter schematischer Darstellung einen Elektromotor mit daran angeordnetem Frequenzumrichter im Längsschnitt,
- Fig. 2: einen Elektromotor mit integriertem Frequenzumrichter im Längsschnitt,
- Fig. 3: den Elektromotor gemäß Fig. 2 mit einem alternativen Rotor,
- Fig. 4: ein Lüfterrad des Motors gemäß Fig. 2 in perspektivischer Darstellung,
- Fig. 5: eine erfindungsgemäße Ausführung eines Elektromotors in Teilexplosionsdarstellung ohne Frequenzumrichtergehäuse,
- Fig. 6: in vergrößerter Darstellung eine perspektivische Ansicht auf die antriebsseitige Stirnseite des Motors nach Fig. 5,
- Fig. 7: eine Stirnansicht auf den Motor gemäß Fig. 5 in Achsrichtung der Motorwelle,
- Fig. 8: eine perspektivische Darstellung der Leiteinrichtung des in Fig. 5 dargestellten Elektromotors.

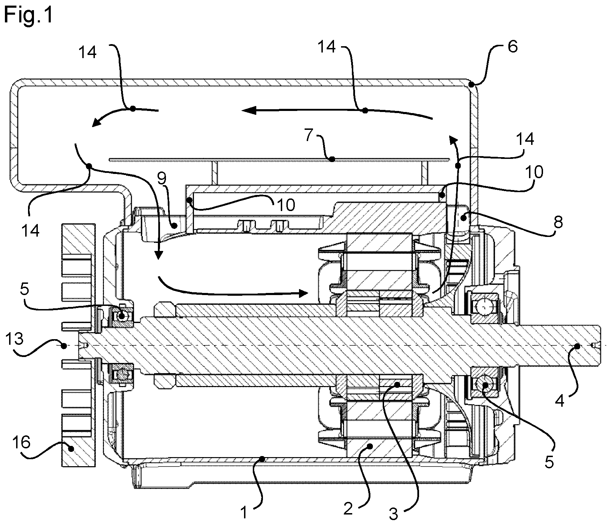

Der schematischen Schnittdarstellung gemäß Fig. 1 ist der grundsätzliche Aufbau eines erfindungsgemäßen Elektromotors zu entnehmen. Der Elektromotor weist ein Motorgehäuse 1 auf, in dem ein Stator 2 angeordnet ist, in dem ein Rotor 3 drehbar gelagert ist. Der Rotor 3 ist mittels einer Rotorwelle 4 im Motorgehäuse 1 drehbar gelagert. Hierzu sind in den Stirnseiten des Motorgehäuses 1 Lager 5 vorgesehen.

An dem im Querschnitt im Wesentlichen runden Motorgehäuse 1 ist umfangseitig ein weiteres Gehäuse 6, hier das Gehäuse eines Frequenzumrichters vorgesehen. Dieses Frequenzumrichtergehäuse 6 ist vom Motorgehäuse 1 beabstandet angeordnet und nimmt die Frequenzumrichterelektronik auf, die die Wärme erzeugende Leistungselektronik beinhaltet, die in Fig. 1 mit 7 gekennzeichnet ist.

Das Frequenzumrichtergehäuse 6 weist an seiner zum Motorgehäuse 1 weisenden Seite zwei durch Ausnehmungen im Gehäuseboden gebildete Leitungsanschlüsse 8 und 9 auf, die durch Rohrabschnitte 10 mit entsprechend fluchtend im Motorgehäuse 1 angeordneten Ausnehmungen 11 und 12, die ebenfalls Leitungsanschlüsse bilden, in Leitungsverbindung stehen. Über die Leitungsanschlüsse 8, 9, die Rohrabschnitte 10 und die Leitungsanschlüsse 11, 12 sind zwei in Richtung der Achse 13 des Motors beabstandete Kanalverbindungen gebildet, welche das Innere, also den Innenraum des Frequenzumrichtergehäuses 6 mit dem Innenraum des Motorgehäuses 1 verbinden. Hierdurch ist ein Kanalkreislauf gebildet, sodass die im Motorgehäuse 1 bzw. im Frequenzumrichtergehäuse 6 befindliche Luft zirkulieren kann, wie dies anhand der Pfeile 14 in Fig. 1 verdeutlicht ist.

Die Luft wird also im Kreislauf geführt, die hierzu erforderliche Druckdifferenz wird durch ein inneres Lüfterrad 15 erzeugt, welches auf der Motorwelle 4 sitzt und beim Betrieb des Motors mit der Motorwelle 4 mitdreht und auf diese Weise einen Luftstrom erzeugt, der durch die Ausnehmung 12 über den Rohrabschnitt 8 und die Ausnehmung 8 in das Frequenzumrichtergehäuse 6 gelangt. Der Luftstrom 14 strömt längs der Leistungselektronik 7 in Richtung parallel zur Motorachse 13 durch das Frequenzumrichtergehäuse 6, um am anderen Ende durch eine den Leitungsanschluss 9 bildende Ausnehmung in den Rohrabschnitt 10 und über die Ausnehmung 11 wieder in das Motorgehäuse 1 zu gelangen.

Innerhalb des Motorgehäuses 1 erfolgt eine nicht erfindungsgemäße ebenfalls im Wesentlichen axiale Durchströmung. Der in Fig. 1 dargestellte Spalt zwischen Rotor 3 und Stator 2 steht für eine Vielzahl von Kanälen, die beispielsweise durch die im Stator typischerweise vorhandene Nuten oder auch gesonderte Ausnehmungen gebildet sein können. Der Luftstrom 14 gelangt dann schließlich wieder zum Lüfterrad 15, wo der Kreislauf von neuem beginnt.

Über den Luftstrom 14 kann die in der Leistungselektronik 7 des Frequenzumrichters erzeugte Wärme zumindest teilweise abgeführt und an den Motor, insbesondere das Motorgehäuse 1 abgegeben werden, das konvektiv gekühlt wird. In der in Fig. 1 dargestellten Ausführungsvariante ist zusätzlich zu dem innerhalb des Motorgehäuses 1 befindlichen Lüfterrad 15 ein externes Lüfterrad 16 vorgesehen, das ebenfalls auf der Motorwelle 4 sitzt und von einer Lüfterhaube überdeckt ist, die in Fig. 1 nicht dargestellt ist. Dieses externe Lüfterrad 16 erzeugt einen Luftstrom, der längs des Umfangs des Motorgehäuses 1 entlang strömt und auf diese Weise das Motorgehäuse 1 außen kühlt. Wie die Fig. 1 verdeutlicht, kühlt dieser Luftstrom nicht nur das Motorgehäuse 1, sondern auch die Unterseite des Frequenzumrichtergehäuses 6.

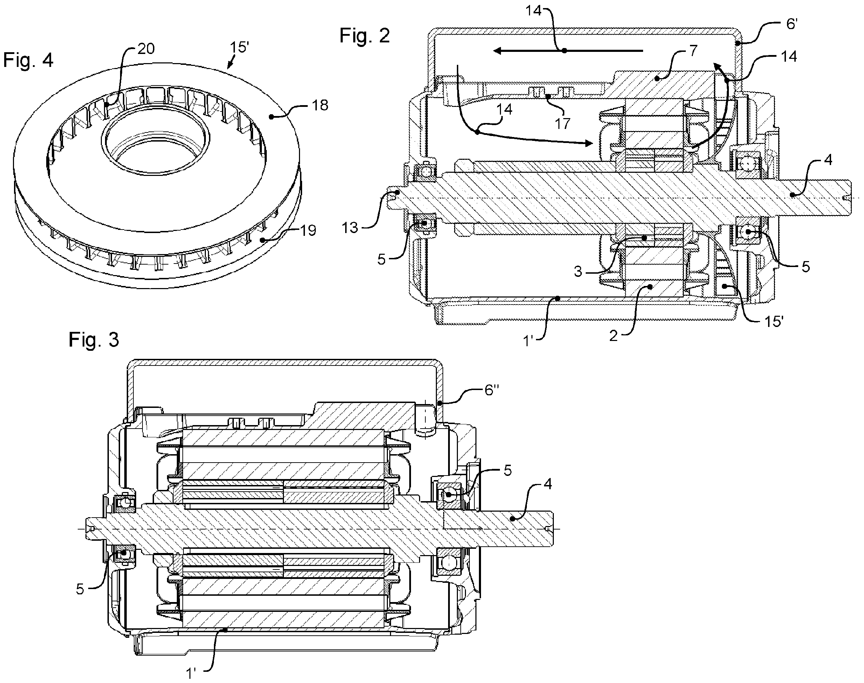

Bei der anhand von Fig. 2 dargestellten nicht erfindungsgemäßen Ausführungsvariante ist das Frequenzumrichtergehäuse 6' nicht vom Motorgehäuse 1' beabstandet angeordnet, sondern integraler Bestandteil desselben, das heißt, der Boden des Frequenzumrichtergehäuses 6' wird durch eine Wand 17 gebildet, die zugleich Wand des Motorgehäuses 1' ist. Die Verbindung zwischen Motorgehäuse 1' und Frequenzumrichtergehäuse 6' ist durch zwei Ausnehmungen in dieser Wand 17 gebildet. Bei dieser Ausführung weist der Motor lediglich ein internes Lüfterrad 15' auf, welches als Axial-/Radiallüfterrad ausgebildet ist. Es weist zum Motor hin eine Deckscheibe 18 auf. Der geschlossene Grundkörper 19 erstreckt sich radial von der Welle 4 bis nahe zum Innenumfang des Motorgehäuses 1. Zwischen der Deckscheibe 18 und dem Grundkörper 19 sind im Wesentlichen radial angeordnete Schaufeln 20 vorgesehen. Dieses innere Lüfterrad 15' ist einstückig als Kunststoffspritzgussteil ausgebildet. Es fördert die durch Stator 2 und Rotor 3 strömende Kühlluft radial nach außen in das Frequenzumrichtergehäuse 6, in dem der Kühlluftstrom 14 parallel zur Rotorachse 13 längs der Leistungselektronik 7 zum anderen Ende strömt, um durch die bodenseitige Ausnehmung wieder in das Motorgehäuse 1' zu gelangen.

Wie ein Vergleich der axialen Ausdehnung von Rotor 3 und Stator 2 der Fig. 2 und 3 verdeutlicht, ist die anhand der Fig. 2 bis 4 beschriebene und nicht zur Erfindung gehörige Ausführungsvariante zur Aufnahme unterschiedlicher Stator-/Rotorkombinationen vorgesehen, um so mit nur einem Motorgehäuse 1' und nur einem Frequenzumrichtergehäuse 6' eine Vielzahl von Leistungsstufen abdecken zu können, ohne die Motorkonstruktion, abgesehen von Stator und Rotor, ändern zu müssen. In Fig. 3 ist aus Übersichtsgründen das interne Lüfterrad 15' nicht dargestellt.

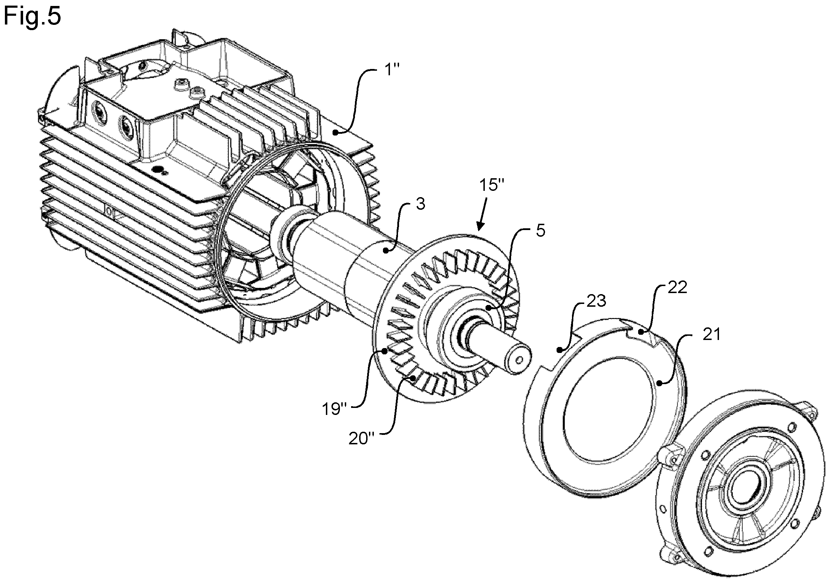

Bei der anhand der Fig. 5 bis 8 dargestellten Ausführungsform gemäß der Erfindung ist das Frequenzumrichtergehäuse aus Übersichtsgründen nicht dargestellt, sondern nur der Motor, dessen Aufbau dem Vorbeschriebenen grundsätzlich entspricht, wobei jedoch ein inneres Lüfterrad 15" vorgesehen ist, welches einen zum Motor und Stator gerichteten Grundkörper 19" und sich davon erstreckende radiale Schaufeln 20", jedoch keine Deckscheibe aufweist. Dieses interne Lüfterrad 15" wirkt mit einer Leiteinrichtung 21 zusammen, die das Lüfterrad 15" umfangsseitig und an seiner freien Stirnseite im Bereich der Schaufeln 20" umgibt.

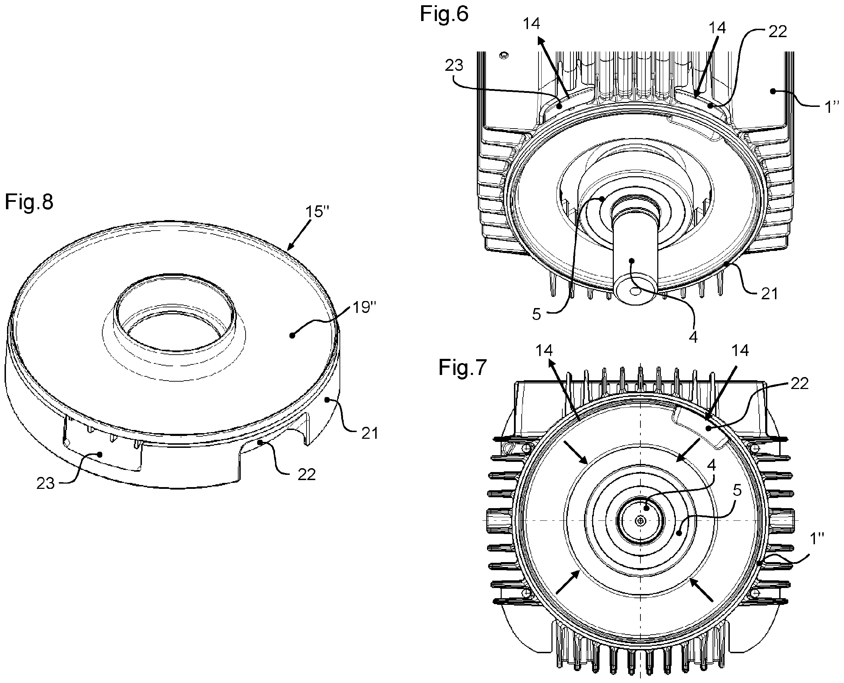

Die Leiteinrichtung 21 weist zwei Ausnehmungen 22 und 23 in ihrer radialen Umfangswand auf, welche die Leitungsanschlüsse zu dem nicht dargestellten Frequenzumrichtergehäuse bilden. Dabei ist die Ausnehmung 22, wie anhand von Fig. 8 ersichtlich ist, nicht nur radial angeordnet, sondern erstreckt sich auch in der vom Stator 2 abgewandten Stirnseite der Leiteinrichtung 21, wohingegen die Ausnehmung 23 ausschließlich radial angeordnet ist. Die Leiteinrichtung 21 umschließt das Lüfterrad 15" also radial vollständig und an seiner offenen Seite ringförmig, sodass sich im Betrieb eine Zirkulationsströmung 14 einstellt, wie sie anhand der Fig. 6 und 7 dargestellt ist.

Durch die Ausnehmung 22 gelangt die aus dem Frequenzumrichtergehäuse kommende Luft in das Motorgehäuse 1', wird im Wesentlichen radial an der vom Motor abgewandten Stirnseite der Leiteinrichtung 21 nach innen geführt, wo sie in den Saugbereich des Lüfterrades 15" gelangt. Von dort wird sie im Wesentlichen radial nach außen gefördert und entweicht durch die radiale Ausnehmung 23 in das Frequenzumrichtergehäuse. Hier ist also die Durchströmung im Motorgehäuse im Wesentlichen an einer Stirnseite gegeben, die Ausnehmungen 22 und 23 liegen in derselben radialen Ebene. Die Strömungsanordnung innerhalb des Frequenzumrichtergehäuses ist in der Zeichnung nicht dargestellt, jedoch so gestaltet, dass die wärmeerzeugenden Bauteile von dem Zirkulationsstrom 14 umströmt werden.

### Bezugszeichenliste

- 1, 1', 1": - Motorgehäuse
- 2: - Stator
- 3: - Rotor
- 4: - Motorwelle
- 5: - Lager
- 6: - weiteres Gehäuse, Frequenzumrichtergehäuse
- 6': - Frequenzumrichtergehäuse in Fig. 2 und 3
- 7: - Leistungselektronik
- 8: - Leitungsanschluss von 6
- 9: - Leitungsanschluss von 6
- 10: - Rohrabschnitte
- 11: - Ausnehmung in 1, Leitungsanschluss
- 12: - Ausnehmung in 1, Leitungsanschluss
- 13: - Motorachse
- 14: - Pfeile, welche die Zirkulationsströmung kennzeichnen
- 15: - inneres Lüfterrad
- 15': - inneres Lüfterrad Fig. 2 und Fig. 4
- 15": - inneres Lüfterrad Fig. 5 bis 8
- 16: - externes Lüfterrad, Fig. 1
- 17: - Wand in Fig. 2
- 18: - Deckscheibe
- 19: - Grundkörper
- 19": - Grundkörper in Fig. 5 bis 8
- 20: - Schaufeln
- 20": - Schaufeln in Fig. 5 bis 8
- 21: - Leiteinrichtung
- 22: - Ausnehmung in 21
- 23: - Ausnehmung in 21

## Patentansprüche

1. Elektromotor mit einem Motorgehäuse (1) und mit einem elektrische und/oder elektronische Bauteile (7) aufweisenden weiteren Gehäuse (6), welches ein Steuergerät aufnimmt und in dem mindestens ein beim Betrieb des Motors Wärme erzeugendes Bauteil (7) angeordnet ist, mit mindestens einem fluidführenden Kanalkreislauf (14), der das Innere des Motorgehäuses (1) mit dem Innenraum des weiteren Gehäuses (6) leitungsverbindet und, mit einem Laufrad (15"') zur Erzeugung einer Fluidströmung im Kanalkreislauf, **dadurch gekennzeichnet, dass** im Motorgehäuse (1 ") eine das Laufrad (15") zur Erzeugung einer Fluidströmung (14) im Kanalkreislauf umgebende Leiteinrichtung (21) vorgesehen ist, die einen im Wesentlichen radial verlaufenden Leitungsausgang (23) in das weitere Gehäuse und einen im Wesentlichen radial angeordneten aus dem weiteren Gehäuse kommenden Leitungseingang (22) aufweist und Leitungseingang (22) und Leitungsausgang (23) in derselben radialen Ebene liegen.

2. Elektromotor nach Anspruch 1, **dadurch gekennzeichnet, dass** das Steuergerät ein Frequenzumrichter ist.

3. Elektromotor nach Anspruch 1 oder 2, **dadurch gekennzeichnet, dass** der Elektromotor ein Permanentmagnetmotor ist.

4. Elektromotor nach einem der vorhergehenden Ansprüche, **dadurch gekennzeichnet, dass** das Fluid im Kanalkreislauf ein Gas, vorzugsweise Luft ist.

5. Elektromotor nach einem der vorhergehenden Ansprüche, **dadurch gekennzeichnet, dass** der Motor eine Welle (4) aufweist, auf der mindestens ein Laufrad (15) zur Erzeugung einer Fluidströmung (14) im Kanalkreislauf sitzt.

6. Elektromotor nach einem der vorhergehenden Ansprüche, **dadurch gekennzeichnet, dass** auf der Welle (4) auch ein Laufrad (16) zur Erzeugung einer Luftströmung längs der Außenseite des Motorgehäuses (1) und/oder des weiteren Gehäuses (6) sitzt.

7. Elektromotor nach einem der vorhergehenden Ansprüche, **dadurch gekennzeichnet, dass** die Fluidführung im Kanalkreislauf im Motorgehäuse (1) und im weiteren Gehäuse (6) in Richtung parallel zur Motorachse (13) oder in einem Winkel bis zu 25° schräg dazu gerichtet ist.

8. Elektromotor nach einem der vorhergehenden Ansprüche, **dadurch gekennzeichnet, dass** das Motorgehäuse (1) und das weitere Gehäuse (6) zumindest mechanisch miteinander verbunden sind.

9. Elektromotor nach einem der vorhergehenden Ansprüche, **dadurch gekennzeichnet, dass** das Motorgehäuse (1') und das weitere Gehäuse (6') mindestens eine gemeinsame Gehäusewand (17) aufweisen.

10. Elektromotor nach einem der vorhergehenden Ansprüche, **dadurch gekennzeichnet, dass** im Rotor (3) und/oder Stator (2) des Motors Nuten oder Kanäle zur Fluidführung vorgesehen sind.

11. Elektromotor nach einem der vorhergehenden Ansprüche, **dadurch gekennzeichnet, dass** ein Leitungsanschluss (8, 9; 11, 12) durch eine Ausnehmung in einer Gehäusewand gebildet ist.

12. Elektromotor nach einem der vorhergehenden Ansprüche, **dadurch gekennzeichnet, dass** das Fluid eine Flüssigkeit ist.

13. Elektromotor nach einem der vorhergehenden Ansprüche, **dadurch gekennzeichnet, dass** der Motor ein Spaltrohrmotor ist.

## Claims

1. An electric motor with a motor housing (1) and with a further housing (6) which comprises electric and/or electronic components (7), receives a control apparatus and in which at least one component (7) which produces heat on operation of the motor is arranged, with at least one fluid-leading channel circuit (14) which conductively connects the inside of the motor housing (1) to the interior of the further housing (6), with an impeller (15"') for producing a fluid flow in the channel circuit, **characterised in that** a guidance device (21) which surrounds the impeller (15") for producing a fluid flow (14) in the channel circuit is provided in the motor housing (1") and comprises an essentially radially running conduit exit (23) into the further housing and an essentially radially arranged conduit entry (22) which comes from the further housing, and the conduit entry (22) and the conduit exit (23) lie in the same radial plane.

2. An electric motor according to claim 1, **characterised in that** the control apparatus is a frequency converter.

3. An electric motor according to claim 1 or 2, **characterised in that** the electric motor is a permanent magnet motor.

4. An electric motor according to one of the preceding claims, **characterised in that** the fluid in the channel circuit is a gas, preferably air.

5. An electric motor according to one of the preceding claims, **characterised in that** the motor comprises a shaft (4), on which at least one impeller (15) is seated for producing a fluid flow (14) in the channel circuit.

6. An electric motor according to one of the preceding claims, **characterised in that** an impeller (16) for producing an airflow along the outer side of the motor housing (1) and/or of the further housing (6) is also seated on the shaft (4).

7. An electric motor according to one of the preceding claims, **characterised in that** the leading of the fluid in the channel circuit in the motor housing (1) and in the further housing (6) is directed in a direction parallel to the motor axis (13) or at an angle up to 25° obliquely thereto.

8. An electric motor according to one of the preceding claims, **characterised in that** the motor housing (1) and the further housing (6) are connected to one another at least mechanically.

9. An electric motor according to one of the preceding claims, **characterised in that** the motor housing (1') and the further housing (6') comprise at least one common housing wall (17).

10. An electric motor according to one of the preceding claims, **characterised in that** grooves or channels for leading fluid are provided in the rotor (3) and/or the stator (2) of the motor.

11. An electric motor according to one of the preceding claims, **characterised in that** a conduit connection (8, 9; 11, 12) is formed by a recess in the housing wall.

12. An electric motor according to one of the preceding claims, **characterised in that** the fluid is a liquid.

13. An electric motor according to one of the preceding claims, **characterised in that** the motor is a canned motor.

## Revendications

1. Moteur électrique comportant un carter de moteur (1) et un autre carter (6) présentant des composants électriques et/ou électroniques (7), qui loge un dispositif de commande et dans lequel est disposé au moins un composant (7) générant de la chaleur lors du fonctionnement du moteur, au moins un circuit de canal (14) conduisant un fluide et qui relie par conduite l'intérieur du carter de moteur (1) à l'espace interne de l'autre carter (6), et une roue mobile (15"') qui permet de générer un écoulement de fluide (14) dans le circuit de canal, **caractérisé en ce qu'**est prévu dans le carter de moteur (1") un dispositif de guidage (21) entourant la roue mobile (15") destinée à générer un écoulement de fluide (14) dans le circuit de canal, lequel dispositif présente une sortie de conduite (23) s'étendant essentiellement de façon radiale dans l'autre carter et une entrée de conduite (22) disposée essentiellement de façon radiale et provenant de l'autre carter, l'entrée de conduite (22) et la sortie de conduite (23) reposant dans le même plan radial.

2. Moteur électrique selon la revendication 1, **caractérisé en ce que** l'appareil de commande est un convertisseur de fréquence.

3. Moteur électrique selon la revendication 1 ou 2, **caractérisé en ce que** le moteur électrique est un moteur à aimant permanent.

4. Moteur électrique selon l'une des revendications précédentes, **caractérisé en ce que** le fluide dans le circuit de canal est un gaz, de préférence de l'air.

5. Moteur électrique selon l'une des revendications précédentes, **caractérisé en ce que** le moteur présente un arbre (4) sur lequel est montée au moins une roue mobile (15) destinée à générer un écoulement de fluide (14) dans le circuit de canal.

6. Moteur électrique selon l'une des revendications précédentes, **caractérisé en ce qu'**est aussi montée sur l'arbre (4) une roue mobile (16) destinée à générer un écoulement d'air le long du côté extérieur du carter de moteur (1) et/ou de l'autre carter (6).

7. Moteur électrique selon l'une des revendications précédentes, **caractérisé en ce que** le guidage du fluide dans le circuit de canal dans le carter de moteur (1) et dans l'autre carter (6) est orienté dans une direction parallèle à l'axe du moteur (13) ou en oblique selon un angle allant jusqu'à 25°.

8. Moteur électrique selon l'une des revendications précédentes, **caractérisé en ce que** le carter de moteur (1) et l'autre carter (6) sont reliés l'un à l'autre au moins mécaniquement.

9. Moteur électrique selon l'une des revendications précédentes, **caractérisé en ce que** le carter de moteur (1') et l'autre carter (6') présentent au moins une paroi de carter (17) commune.

10. Moteur électrique selon l'une des revendications précédentes, **caractérisé en ce que** sont prévus dans le rotor (3) et/ou le stator (2) du moteur des rainures ou des canaux de guidage du fluide.

11. Moteur électrique selon l'une des revendications précédentes, **caractérisé en ce qu'**un raccordement de conduite (8, 9 ; 11, 12) est formé par un évidement pratiqué dans une paroi de carter.

12. Moteur électrique selon l'une des revendications précédentes, **caractérisé en ce que** le fluide est un liquide.

13. Moteur électrique selon l'une des revendications précédentes, **caractérisé en ce que** le moteur est un moteur à gaine.
